(19) Europäisches Patentamt
European Patent Office
Office européen des brevets

(11) **EP 2 301 775 A1**

(12) **EUROPÄISCHE PATENTANMELDUNG**

(43) Veröffentlichungstag:
**30.03.2011 Patentblatt 2011/13**

(21) Anmeldenummer: **10181782.3**

(22) Anmeldetag: **29.09.2010**

(51) Int Cl.:
*B60G 17/052* (2006.01)   *B60G 17/015* (2006.01)
*B60G 17/018* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **29.09.2009 DE 102009045099**

(71) Anmelder: **Continental Teves AG & Co. oHG 60488 Frankfurt (DE)**

(72) Erfinder:
• **Schaumburg, Harald**
  **31157 Sarstedt (DE)**
• **Vusmuc, Ramon**
  **550147 Sibiu (RO)**
• **Barbus, Flavius**
  **550018 Sibiu (RO)**

(54) **Verfahren zur Bestimmung der Luftmasse in einem elektronisch regelbaren Luftfedersystem für Kraftfahrzeuge und Vorrichtung zur Durchführung des Verfahrens**

(57) Die vorliegende Erfindung betrifft ein Verfahren zur Bestimmung der Luftmasse in einem elektronisch regelbaren Luftfedersystem für Kraftfahrzeuge mit einem Vorratsbehälter, wobei jedem Fahrzeugrad jeweils eine Luftfederdämpfereinheit zugeordnet ist. Außerdem betrifft die Erfindung eine Vorrichtung zur Durchführung des Verfahrens.

Um jederzeit die sich im Luftfedersystem befindliche Luftmasse ermitteln zu können ist erfindungsgemäß vorgesehen, dass der sich im Luftfedersystem (1) befindliche Luftdruck ($p_{gesamt}$) ermittelt wird und anschließend die sich im Luftfedersystem (1) befindliche Luftmasse ($M_{Luft}$) berechnet wird. Zu diesem Zweck wird das Volumen ($V_{gesaml}$) des Luftfedersystems (1) durch eine vorab durchgeführte Messung oder Berechnung der Volumina ($V_2$, $V_{RR}$, $V_{RL}$, $V_{FR}$, $V_{FL}$) des Vorratsbehälters (2) und der Luftfederdämpfereinheiten (RL, RR, FL, FR) bestimmt.

Fig. 1

EP 2 301 775 A1

**Beschreibung**

Die vorliegende Erfindung betrifft ein Verfahren zur Bestimmung der Luftmasse in einem elektronisch regelbaren Luftfedersystem für Kraftfahrzeuge mit einem Vorratsbehälter, wobei jedem Fahrzeugrad jeweils eine Luftfederdämpfereinheit zugeordnet ist. Außerdem betrifft die Erfindung eine Vorrichtung zur Durchführung des Verfahrens.

Aus der WO 2005/030510 A1 ist ein Luftfedersystem für Kraftfahrzeuge der eingangs genannten Gattung bekannt. Luftfedersysteme bieten einen hohen Komfort für die Fahrzeuginsassen. Bei der Durchführung einer Wartung des Luftfedersystems wird der aktuelle Wert der sich im Luftfedersystem befindlichen Luftmasse benötigt, um sicherzustellen, dass die richtige Lufmasse zur Niveauverstellung im Luftfedersystem vorhanden ist.

Es ist daher Aufgabe der vorliegenden Erfindung, ein Verfahren und eine Vorrichtung darzustellen, die es gestatten, die sich im Luftfedersystem befindliche Masse an Luft zu bestimmen.

Diese Aufgabe wird durch eine Vorrichtung und ein Verfahren mit den Merkmalen der unabhängigen Patentansprüche gelöst. Dabei ist vorgesehen, dass der sich im Luftfedersystem befindliche Luftdruck ermittelt wird und anschließend die sich im Luftfedersystem befindliche Luftmasse berechnet wird. Dabei werden die Ausgangssignale eines einzelnen Drucksensors und von jeweils einem Höhensensor, der jeder Luftfederdämpfereinheit zugeordnet ist, zur Berechnung der Luftmasse verwendet. Die Idee bei dem erfindungsgemäßen Verfahren ist es, eine Messung des Drucks in den Luftfederdämpfereinheiten und im Vorratsbehälter mit Hilfe des vorhandenen Drucksensors und der vorhandenen Höhensensoren durchzuführen. Anschließend wird auf Grundlage des gemessenen Drucks und des, mittels der Höhensensoren, berechneten Volumens die Luftmasse im System berechnet. Das Volumen des Luftfedersystems wird durch eine vorab durchgeführte Messung oder Berechnung der Volumina des Vorratsbehälters und der Luftfederdämpfereinheiten bestimmt. Vorteilhaft ist dabei, dass lediglich ein Drucksensor und die Höhensensorik notwendig ist, um eine Berechung vorzunehmen. Ein weiterer Vorteil des erfindungsgemäßen Verfahrens besteht in einem leichten Zugriff auf den Wert der Luftmasse im Luftfedersystem. Dieser Wert kann jederzeit zur Verfügung gestellt werden. Dadurch muss nicht auf den Basiswert der Luftmasse beim Befüllen des Luftfedersystems zurückgegriffen werden.

Zur Konkretisierung des Erfindungsgedanken sind die folgenden Verfahrensschritte vorgesehen:

- Messen des Luftdrucks im Vorratsbehälter bei geöffneten Umschaltventilen und geschlossenen Ventilen der Luftfederdämpfereinheiten;
- Schließen eines Umschaltventils und
- Öffnen eines Ventils und Messen des Luftdrucks in der zugeordneten Luftfederdämpfereinheit und Schließen des Ventils.

Dabei wird der letzte Verfahrensschritt wiederholt, bis der Luftdruck in jeder Luftfederdämpfereinheit gemessen ist.

Bei der erfindungsgemäßen Vorrichtung sind Mittel vorgesehen, die den sich im Luftfedersystem befindlichen Luftdruck ermitteln und anschließend die sich im Luftfedersystem befindliche Luftmasse berechnen.

Es ist vorgesehen, dass die Mittel durch eine Steuereinheit gebildet werden, die mit einem CAN-Datennetzwerk des Kraftfahrzeugs verbindbar ist. Durch diese Maßnahme ist eine Wartungs- und/oder Werkstattvorrichtung realisierbar, die zur Bestimmung der Luftmasse dient. In der Steuereinheit ist eine Software-Funktion mit einem Algorithmus gespeichert, um das die Luftmasse im Luftfedersystem zu bestimmen. Die Bestimmung erfolgt auf Grundlage des Luftdrucks in jeder Luftfederdämpfereinheit und im Vorratsbehälter, der durch einen Drucksensor erfasst wird.

Die Erfindung wird nachfolgend anhand eines Ausführungsbeispiels im Zusammenhang mit der beiliegenden Zeichnung näher erläutert. In der Zeichnung zeigen:

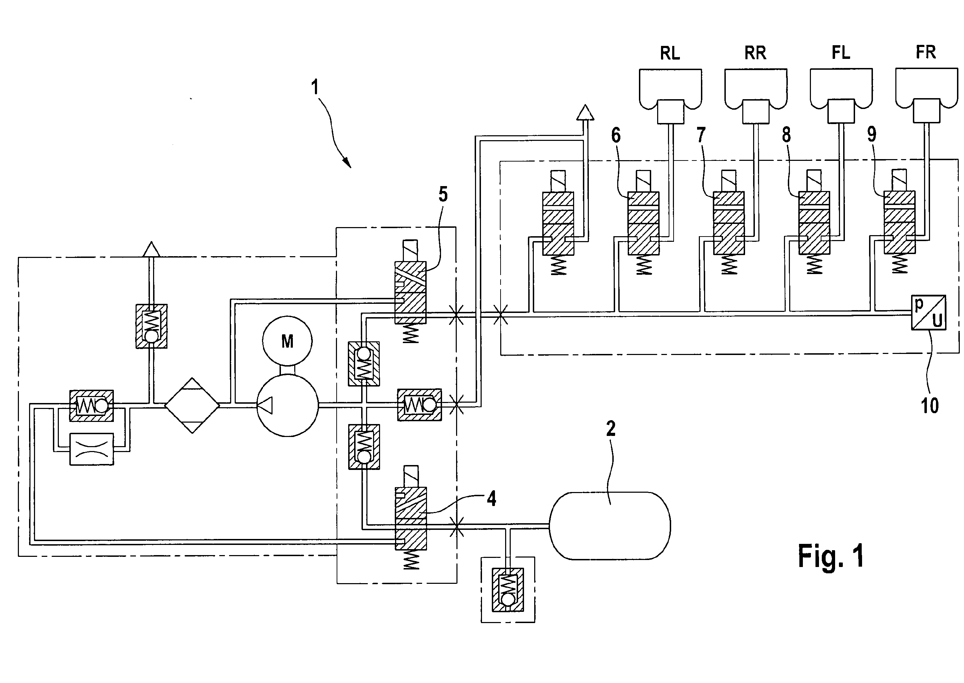

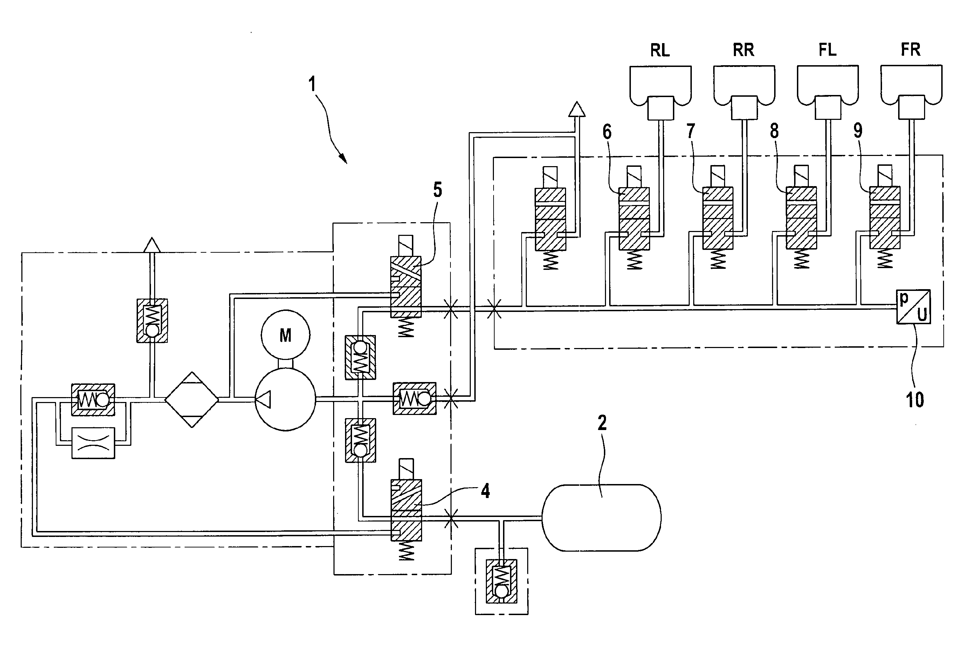

Fig. 1     ein Schaltbild eines Luftfedersystems mit jeweils einer Luftfederdämpfereinheit an jedem Fahrzeugrad.

Das in Fig. 1 schematisch dargestellte Luftfedersystems 1 weist vier Luftfederdämpfereinheiten RL, RR, FL, FR auf, die jeweils einem Fahrzeugrad eines Kraftfahrzeugs zugeordnet sind. Jeder der Luftfederdämpfereinheiten RL, RR, FL, FR ist über ein stromlos geschlossenes Ventil 6, 7, 8, 9 an ein Druckluftleitungssystem angeschlossen. Das Luftfedersystem 1 weist weiterhin einen Vorratsbehälter 2 auf, der über zwei Umschaltventile 4, 5 mit den Luftfederdämpfereinheiten RL, RR, FL, FR verbindbar ist. Im Druckluftleitungssystem befindet sich ein Drucksensor 10, der den im Druckluftleitungssystem herrschenden Druck ermittelt und ein entsprechendes Signal an eine nicht dargestellt Steuereinheit ausgibt. Bei dem Luftfedersystem 1 handelt es sich um ein geschlossenes System, bei dem nur im Wartungs- oder Reparaturfall von außen Druckluft zugeführt wird.

Während einer Reparatur- oder Wartungsarbeit am Luftfedersystem 1 war bislang kein Verfahren zur Messung des aktuellen Luftmassenwerts $M_{Luft}$ bekannt. Das vorliegende Verfahren ist zur Bestimmung der Luftmasse $M_{Luft}$ im Luftfedersystem 1 vorgesehen. Das Verfahren sieht vor, dass der sich im Luftfedersystem 1 befindliche Luftdruck $p_{geamt}$ ermittelt wird und mit Hilfe des berechneten Volumens $V_{gesamt}$ des Luftfedersystems 1 kann auf einfache Weise die sich im Luftfedersystem 1 befindliche Luftmasse $M_{Luft}$ berechnet werden. Der Gedanke ist dabei, dass zur Messung des Drucks $p_{gesamt}$ der bereits vorhandene Drucksensor 10 verwendet wird.

Die Messung des sich im Luftfedersystem 1 befindlichen Luftdrucks $p_{gesamt}$ wird in einzelne Messungen unterteilt: Zunächst wird der Luftdruck $p_2$ im Vorratsbehälter 2 gemessen. Dazu werden die den Luftfederdämpfereinheiten RL, RR, FL, FR zugeordneten Ventile 6, 7, 8, 9 geschlossen. Die Umschaltventile 4, 5 werden so geschaltet, dass der Drucksensor 10 mit dem Vorratsbehälter 2 in Verbindung steht und eine Ermittlung des Drucks $p_2$ im Vorratsbehälter 2 erfolgen kann. Anschließend wird ein Umschaltventil 4 geschlossen und das Ventil 6 der Luftfederdämpfereinheit RL geöffnet, während die anderen Ventile 7, 8, 9 geschlossen bleiben. Nun wird eine Messung des Drucks $p_{RL}$ in der Luftfederdämpfereinheit RL durchgeführt. Anschließend wird das Ventil 6 wieder geschlossen und eines der anderen Ventile 7, 8, 9 geöffnet, um den Druck $p_{RR}$, $p_{FR}$, $p_{FL}$ in einer der übrigen Luftfederdämpfereinheiten RR, FL, FR zu messen. Der Vorgang wird so lange wiederholt, bis alle Druckwerte $p_{RR}$, $P_{RL}$, $P_{FR}$, $P_{FL}$ vorliegen. Die Luftmasse $M_{Luft}$ im gesamten Luftfedersystem 1 ergibt sich aus der Summe der einzelnen Druckwerte $P_2$, $P_{RR}$, $P_{RL}$, $P_{FR}$, $P_{FL}$ und aus dem Volumen $V_{gesamt}$ des Luftfedersystems 1. Das Gesamtvolumen $V_{gesamt}$ wird näherungsweise durch die Volumina des Vorratsbehälters 2 und der Luftfederdämpfereinheiten RL, RR, FL, FR bestimmt.

$$P_{gesamt} * V_{gesamt} = p_2 * V_2 + p_{RR} * V_{RR} + p_{RL} * V_{RL} + p_{FR} * V_{FR} + p_{FL} * V_{FL}$$

Das beschriebene Verfahren Bestimmen der Luftmasse $M_{Luft}$ des Luftfedersystems 1 kann mit einem Diagnoseprogramm, das an das CAN-Netzwerk angeschlossen wird, aufgerufen werden. Zu diesem Zweck ist das Diagnoseprogramm in einer Steuereinheit abgelegt, die mit dem CAN-Datennetzwerk des Kraftfahrzeugs verbunden werden kann. Diese Steuereinheit wird von einem fachkundigen Werkstattpersonal an das Kraftfahrzeug angeschlossen und das beschriebene Verfahren wird gestartet.

Die Idee bei dem beschriebenen Verfahren ist es, eine Messung des Drucks in den Luftfederdämpfereinheiten RL, RR, FL, FR und im Vorratsbehälter 2 mit Hilfe des vorhandenen Drucksensors 10 durchzuführen. Anschließend wird auf Grundlage des gemessenen Drucks $p_2$, $p_{RR}$, $p_{RL}$, $p_{FR}$, $p_{FL}$ und des bekannten Volumens des Vorratsbehälters und der berechneten Volumen der Luftfederdämpfereinheiten RL, RR, FL, FR die Luftmasse im System berechnet. Dass lediglich ein ohnehin bereits im Luftfedersystem vorhandener Drucksensor 10 und die ebenfalls vorhandene Höhensensorik notwendig ist, um die Berechung vorzunehmen, ist dabei als besonders vorteilhaft anzusehen. Die im Luftfedersystem 1 befindliche Luftmasse kann jederzeit berechnet werden. Der stets aktuelle Wert der Luftmasse $M_{Luft}$ ist notwendig, um sicherzustellen, dass die richtige Luftmasse zur Niveauverstellung im Luftfedersystem vorhanden ist.

**Patentansprüche**

1. Verfahren zur Bestimmung der Luftmasse ($M_{Luft}$) in einem elektronisch regelbaren Luftfedersystem (1) für Kraftfahrzeuge mit einem Vorratsbehälter (2), wobei jedem Fahrzeugrad jeweils eine Luftfederdämpfereinheit (RL, RR, FL, FR) zugeordnet ist, **dadurch gekennzeichnet, dass** der sich im Luftfedersystem (1) befindliche Luftdruck ($p_{gesamt}$) ermittelt wird und anschließend die sich im Luftfedersystem (1) befindliche Luftmasse ($M_{Luft}$) berechnet wird.

2. Verfahren nach Anspruch 1, **dadurch gekennzeichnet, dass** die Ausgangssignale eines einzelnen Drucksensors (10) zur Berechnung der Luftmasse ($M_{Luft}$) verwendet werden.

3. Verfahren nach Anspruch 1 oder 2, **gekennzeichnet durch** die folgenden Verfahrensschritte:

   - Messen des Luftdrucks ($p_2$) im Vorratsbehälter (2) bei geöffneten Umschaltventilen (4, 5) und geschlossenen Ventilen (6, 7, 8, 9) der Luftfederdämpfereinheiten (RL, RR, FL, FR);
   - Schließen eines Umschaltventils (4) und
   - Öffnen eines Ventils (6, 7, 8, 9) und Messen des Luftdrucks ($p_{RR}$, $p_{RL}$, $p_{FR}$, $p_{FL}$) in der zugeordneten Luftfederdämpfereinheit (RL, RR, FL, FR) und Schließen des Ventils (6, 7, 8, 9).

4. Verfahren nach Anspruch 3, **dadurch gekennzeichnet, dass** der letzte Verfahrensschritt wiederholt wird, bis der Luftdruck ($p_{RR}$, $p_{RL}$, $p_{FR}$, $p_{FL}$) in jeder Luftfederdämpfereinheit (RL, RR, FL, FR) gemessen ist.

5. Verfahren nach einem der vorhergehenden Ansprüche, **dadurch gekennzeichnet, dass** das Volumen ($V_{gesamt}$) des Luftfedersystems (1) durch eine vorab durchgeführte Messung oder Berechnung der Volumina ($V_2$, $V_{RR}$, $V_{RL}$,

$V_{FR}$, $V_{FL}$) des Vorratsbehälters (2) und der Luftfederdämpfereinheiten (RL, RR, FL, FR) bestimmt wird.

6. Vorrichtung zur Bestimmung der Luftmasse ($M_{Luft}$) in einem elektronisch regelbaren Luftfedersystem (1) für Kraftfahrzeuge mit einem Vorratsbehälter (2), wobei jedem Fahrzeugrad jeweils eine Luftfederdämpfereinheit (RL, RR, FL, FR) zugeordnet ist, **dadurch gekennzeichnet, dass** Mittel vorgesehen sind, die den sich im Luftfedersystem (1) befindlichen Luftdruck ($p_{gesamt}$) ermitteln und anschließend die sich im Luftfedersystem (1) befindliche Luftmasse ($M_{Luft}$) berechnen.

7. Vorrichtung nach Anspruch 6, **dadurch gekennzeichnet, dass** die Mittel durch eine Steuereinheit gebildet werden, die mit einem CAN-Datennetzwerk des Kraftfahrzeugs verbindbar ist.

8. Vorrichtung nach Anspruch 6 oder 7, **dadurch gekennzeichnet, dass** ein Drucksensor (10) vorgesehen ist, der den Luftdruck ($p_2$, $p_{RR}$, $p_{RL}$, $p_{FR}$, $p_{FL}$) in jeder Luftfederdämpfereinheit (RL, RR, FL, FR) und im Vorratsbehälter (2) erfasst.

RL    RR    FL    FR

Fig. 1

EP 2 301 775 A1

RL    RR    FL    FR

EP 2 301 775 A1

Europäisches Patentamt
European Patent Office
Office européen des brevets

## EUROPÄISCHER RECHERCHENBERICHT

Nummer der Anmeldung

EP 10 18 1782

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 256 466 A2 (CONTINENTAL AG [DE]) 13. November 2002 (2002-11-13) | 1-6,8 | INV. B60G17/052 B60G17/015 B60G17/018 |
| Y | * Absatz [0023] - Absatz [0027]; Abbildungen * | 7 | |
| Y | EP 1 925 518 A2 (WABCO GMBH [DE]) 28. Mai 2008 (2008-05-28) | 7 | |
| A | * Absatz [0007] - Absatz [0013]; Abbildung * | 1,6 | |
| X | DE 10 2005 045269 A1 (CONTINENTAL AG [DE]) 29. März 2007 (2007-03-29) | 1-6,8 | |
| Y | * Absatz [0024] - Absatz [0040]; Ansprüche 1-3; Abbildungen * | 7 | |
| X | DE 101 60 972 C1 (DAIMLER CHRYSLER AG [DE]) 23. Januar 2003 (2003-01-23) * Anspruch 1; Abbildung * | 1,2,6 | |
| X | WO 2005/105492 A1 (CONTINENTAL AG [DE]; STILLER ALEXANDER [DE]) 10. November 2005 (2005-11-10) * Seite 8, Zeile 4 - Seite 14; Abbildung 1 * | 1-8 | |
| X | EP 1 844 961 A1 (KNORR BREMSE SYSTEME [DE]) 17. Oktober 2007 (2007-10-17) * das ganze Dokument * | 1,6 | |
| X | WO 2009/054797 A1 (SCANIA CV ABP; STAVAEUS MIKAEL [SE]) 30. April 2009 (2009-04-30) * das ganze Dokument * | 1,6 | |
| A | WO 2005/113272 A1 (CONTINENTAL AG [DE]; STEGMANN AXEL [DE]) 1. Dezember 2005 (2005-12-01) * Seite 6 - Seite 8; Ansprüche; Abbildung * | 1,6 | |

RECHERCHIERTE SACHGEBIETE (IPC)

B60G

-/--

Der vorliegende Recherchenbericht wurde für alle Patentansprüche erstellt

| Recherchenort | Abschlußdatum der Recherche | Prüfer |
|---|---|---|
| Den Haag | 3. Dezember 2010 | Tsitsilonis, Lucas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EP 2 301 775 A1

Europäisches
Patentamt

European
Patent Office

Office européen
des brevets

**EUROPÄISCHER RECHERCHENBERICHT**

Nummer der Anmeldung

EP 10 18 1782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2005/030510 A1 (CONTINENTAL AG [DE]; GROTENDORST JOERG [DE]) 7. April 2005 (2005-04-07) * Abbildung * ----- | 1,6 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 3. Dezember 2010 | Tsitsilonis, Lucas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 18 1782

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2010

| Im Recherchenbericht angeführtes Patentdokument | Datum der Veröffentlichung | Mitglied(er) der Patentfamilie | Datum der Veröffentlichung |
|---|---|---|---|
| EP 1256466 A2 | 13-11-2002 | DE 10122567 C1<br>JP 4040898 B2<br>JP 2003054236 A<br>US 2002166321 A1 | 21-11-2002<br>30-01-2008<br>26-02-2003<br>14-11-2002 |
| EP 1925518 A2 | 28-05-2008 | AT 475569 T<br>CN 101186176 A<br>DE 102006054813 A1<br>ES 2347362 T3 | 15-08-2010<br>28-05-2008<br>29-05-2008<br>28-10-2010 |
| DE 102005045269 A1 | 29-03-2007 | AT 434537 T<br>EP 1928675 A1<br>WO 2007033884 A1<br>JP 2009508742 T<br>KR 20080045675 A<br>US 2008190170 A1 | 15-07-2009<br>11-06-2008<br>29-03-2007<br>05-03-2009<br>23-05-2008<br>14-08-2008 |
| DE 10160972 C1 | 23-01-2003 | DE 10164948 A1<br>US 2003107191 A1 | 20-09-2007<br>12-06-2003 |
| WO 2005105492 A1 | 10-11-2005 | DE 102004021170 A1<br>EP 1744914 A1<br>JP 2007534549 T<br>KR 20070004130 A<br>US 2008195277 A1 | 24-11-2005<br>24-01-2007<br>29-11-2007<br>05-01-2007<br>14-08-2008 |
| EP 1844961 A1 | 17-10-2007 | DE 102006016989 A1 | 18-10-2007 |
| WO 2009054797 A1 | 30-04-2009 | EP 2212132 A1<br>SE 0702376 A | 04-08-2010<br>27-04-2009 |
| WO 2005113272 A1 | 01-12-2005 | DE 102004025340 A1<br>EP 1750957 A1<br>JP 2007537920 T<br>US 2007228676 A1 | 15-12-2005<br>14-02-2007<br>27-12-2007<br>04-10-2007 |
| WO 2005030510 A1 | 07-04-2005 | DE 10344153 A1 | 28-04-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005030510 A1